# FASCICULE DE BREVET EUROPEEN

(11) **EP 3 726 081 B1**
(45) Date de publication et mention de la délivrance du brevet: **25.10.2023**
(21) Numéro de dépôt: 19305495.4
(22) Date de dépôt: 16.04.2019
(51) Int. Cl.: F16D 1/076, H02K 1/28, H02K 7/00, F16D 1/033, F16D 1/08, F16D 1/10, F04D 25/06

(54) **SYSTÈME MÉCANIQUE ET MOTOCOMPRESSEUR ASSOCIÉ**
MECHANISCHES SYSTEM UND ANGEKOPPELTER MOTORKOMPRESSOR
MECHANICAL SYSTEM AND ASSOCIATED MOTORCOMPRESSOR

(43) Date de publication de la demande: 21.10.2020
(73) Titulaire: GE Energy Power Conversion Technology Ltd, RUGBY, Warwickshire CV21 1BD (GB)
(72) Inventeur: GALMICHE, Christophe, 54250 CHAMPIGNEULLES (FR); DURANTAY, Lionel, 54390 FROUARD (FR)
(74) Mandataire: Casalonga

(56) Documents cités:
- EP-A2- 1 102 384
- WO-A1-2012/057885
- WO-A1-2017/194379
- DE-A1-102004 031 152
- DE-A1-102015 223 631
- DE-A1-102016 100 819
- FR-A1- 2 813 105
- JP-A- S 501 245

## Description

La présente invention concerne les systèmes mécaniques comprenant au moins un rotor sans arbre traversant relié à un arbre de transmission.

La présente invention concerne également un motocompresseur comprenant un tel système mécanique.

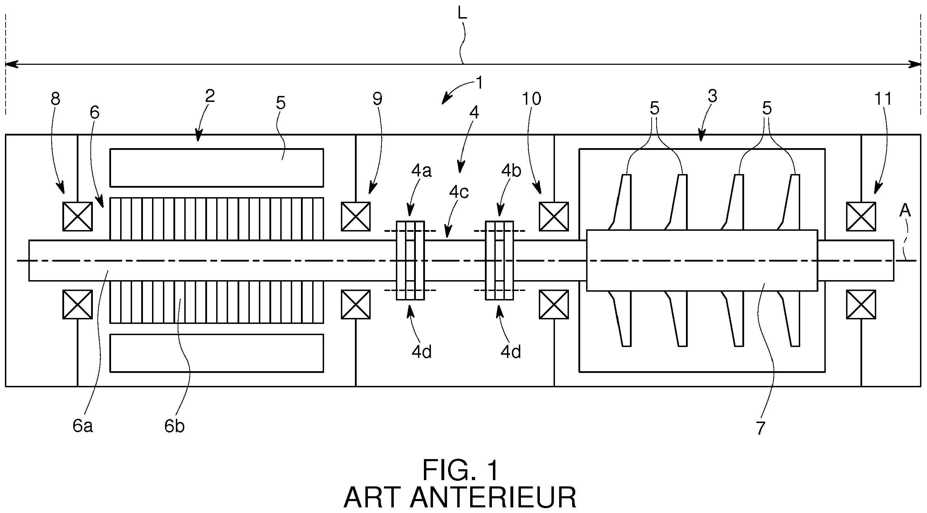

La figure 1 illustre un exemple de motocompresseur 1 comprenant un système mécanique selon l'état de la technique comportant une machine électrique tournante 2 reliée à une section de compression 3 par l'intermédiaire d'un dispositif d'accouplement flexible 4.

Le dispositif d'accouplement flexible 4 comprend deux tourteaux d'accouplement 4a et 4b reliés par un arbre 4c. Les tourteaux 4a et 4b sont pourvus d'une garniture flexible 4d.

La machine électrique tournante 2 comprend un stator 5 dans lequel est inséré un rotor 6 à arbre traversant comportant un arbre 6a traversant les tôles magnétiques 6b et relié au tourteau 4a.

La section de compression 3 comprend des roues 5 de compression montées sur un arbre 7 de la section 3.

L'arbre 7 de la section 3 est relié au tourteau d'accouplement 4b.

Des paliers 8 et 9 maintiennent en rotation l'arbre rotorique 6a de la machine électrique 2 et des paliers 10 et 11 maintiennent en rotation l'arbre 7 de la section 3.

Le dispositif d'accouplement flexible permet de désolidariser les modes propres des arbres rotorique 6a et de l'arbre 7 de la section de compression 3.

On pourra également se référer au documents US7,144,226, US8,137,081, US3,874,823, GB282113 et GB1068004 qui divulguent un motocompresseur comprenant le dispositif d'accouplement flexible reliant une machine électrique tournante avec une section de compression.

Cependant, le dispositif d'accouplement flexible 4 augmente la masse de la ligne de transmission comprenant l'arbre rotorique 6a, le dispositif flexible 4 et l'arbre 7, et augmente la longueur L selon un axe de rotation A du motocompresseur 1.

De plus, les paliers 9 et 10 sont dimensionnés pour supporter la masse du dispositif 4, augmentant d'autant plus la masse et la longueur du motocompresseur 1.

En outre, le dispositif d'accouplement flexible 4 dissipe de l'énergie thermique dégradant le rendement global du motocompresseur 1.

De plus, dans les cas où la machine électrique tournante comprend un rotor à arbre traversant, la vitesse périphérique du rotor est limitée à 200 m/s afin de limiter la concentration de contraintes dans les tôles magnétiques 6b générées sous l'effet de la force centrifuge et susceptible d'endommager le rotor. Cette limitation de la vitesse de rotation dégrade le rendement du motocompresseur.

On pourra également se référer aux documents WO2015/153081, US2012/0164005, EP1392981, EP1074746 et US2002/0037772 qui divulguent un motocompresseur comprenant une machine électrique tournante comprenant un rotor à arbre traversant ou monobloc relié directement à un arbre d'une section de compression.

Comme le rotor est monobloc, il ne comprend pas d'arbre traversant. Par conséquent la vitesse de rotation du rotor n'est pas limitée. La liaison directe entre la machine électrique tournante et la section de compression permet de supprimer un palier, par exemple le palier 10 représentée à la figure 1 et le dispositif d'accouplement flexible 4 représentée à la figure 1.

Le rotor monobloc comprend une cage d'écureuil réalisée par exemple en cuivre et insérée directement dans le rotor réalisé par exemple en acier au carbone.

Par conséquent, les courants induits dans la cage d'écureuil circulent dans le rotor en acier au carbone entraînant un échauffement thermique du rotor (« pertes fer ») dégradant le rendement de la machine tournante.

Le document EP1102384A2 divulgue un rotor pour une machine électrique. Le rotor comprend une masse magnétique, deux bouts d'arbres enserrant la masse magnétique, et des barres de court-circuit traversant les bouts d'arbres.

Le document DE102015223631A1 divulgue un rotor comprenant un arbre rotorique creux comprenant un élément de distribution de refroidissement.

Il est donc proposé de pallier tout ou partie des inconvénients des systèmes mécaniques selon l'état de la technique, notamment en diminuant la masse et l'encombrement desdits systèmes, en augmentant la vitesse de rotation de la machine électrique tournante incorporée dans lesdits systèmes et en augmentant le rendement global et la puissance desdits systèmes.

Au vu de ce qui précède, il est proposé un système mécanique pour machine électrique tournante comprenant au moins un rotor et au moins un arbre de transmission pour dispositif mécanique.

Le rotor est à arbre non traversant et comprend une masse magnétique cylindrique enserrée entre un premier et un deuxième éléments de compaction rapportés formant un arbre rotorique, une extrémité de l'arbre de transmission étant reliée directement au premier élément de compaction.

Une extrémité du premier ou du deuxième arbre de transmission comprenant un premier tourteau d'accouplement, le premier ou le deuxième élément de compaction comprenant une bride de fixation en contact avec la masse magnétique, l'extrémité libre du premier ou du deuxième élément de compaction comprenant un deuxième tourteau d'accouplement relié avec le tourteau d'accouplement du premier ou du deuxième arbre de transmission de sorte qu'un couple mécanique transite à travers l'un des arbres de transmission et la bride de fixation.

Le système mécanique comprend des vis, chaque vis passant par un trou lisse débouchant du premier tourteau d'accouplement et étant en prise dans un trou taraudé du deuxième tourteau d'accouplement, les trous taraudés étant répartis uniformément sur un diamètre d'implantation du deuxième tourteau et les trous lisses débouchant étant répartis uniformément sur un diamètre d'implantation du premier tourteau, les diamètres d'implantation des trous des premier et deuxième tourteaux étant égaux ou sensiblement égaux.

Le système mécanique comprend des tirants répartis uniformément sur un diamètre de la masse magnétique de manière à maintenir la masse magnétique compactée entre les deux éléments de compaction, l'extrémité des tirants dans le premier ou le deuxième élément de compaction étant noyée dans ledit élément de compaction.

Selon une caractéristique générale, les tirants sont maintenus dans un élément de compaction par un écrou noyé dans l'élément de compaction ou sont pris dans un taraudage inséré dans un élément de compaction de sorte que l'extrémité du tirant ne dépasse pas de l'élément de compaction, la bride de fixation et le deuxième tourteau d'accouplement formant une seule pièce, le diamètre d'implantation des tirants étant inférieur aux diamètres d'implantation des premier et deuxième tourteaux ou le diamètre d'implantation des tirants étant égal ou sensiblement égal aux diamètres d'implantation des premier et deuxième tourteaux, les trous taraudés alternant avec les trous d'implantation des tirants.

Selon une caractéristique, le système mécanique comprend en outre un deuxième arbre de transmission pour dispositif mécanique, le deuxième arbre de transmission étant relié directement au deuxième élément de compaction.

Selon une autre caractéristique, le système mécanique comprend en outre un deuxième rotor à arbre non traversant, le deuxième élément de compaction du deuxième rotor étant relié directement à une deuxième extrémité de l'arbre de transmission.

De préférence, les premier et deuxième éléments de compaction sont de structure identique.

Selon un exemple illustratif, le premier ou le deuxième élément de compaction comprend une bride de fixation en contact avec la masse magnétique et venue de même matière avec le premier ou le deuxième arbre de transmission.

Selon un exemple illustratif, le premier ou le deuxième élément de compaction comprend une bride de fixation en contact avec la masse magnétique, l'extrémité libre du premier ou du deuxième élément de compaction comprenant un manchon d'accouplement, le premier ou le deuxième arbre s'emboîtant dans le manchon d'accouplement de sorte qu'un couple mécanique transite à travers l'un des arbres de transmission et la bride de fixation.

Selon un exemple illustratif, le système mécanique comprend en outre un arbre médian reliant la bride de fixation et le deuxième tourteau d'accouplement.

Selon encore une autre caractéristique, le premier tourteau comprend un trou borgne central et le deuxième tourteau comprend un pion central s'emboîtant dans le trou borgne pour transmettre un couple entre les premier et deuxième tourteaux.

Avantageusement, les premier et deuxième tourteaux comprennent des trous borgnes répartis uniformément sur un même diamètre, le système comprenant en outre des pions insérés dans les trous borgnes des premier et deuxième tourteaux pour transmettre un couple entre les premier et deuxième tourteaux.

Selon un exemple illustratif, le premier ou le deuxième élément de compaction comprend une bride de fixation en contact avec la masse magnétique, l'extrémité libre du premier ou du deuxième élément de compaction comprenant un trou traversant central, une extrémité du premier ou deuxième arbre de transmission étant emboîtée dans le trou traversant de sorte qu'un couple mécanique transite à travers l'un des arbres et la bride de fixation.

Selon un autre aspect, il est proposé un motocompresseur comprenant un système d'entraînement mécanique tel que défini précédemment, un même nombre de machine électrique tournante que de rotor et un même nombre de dispositif mécanique que d'arbre de transmission, chaque rotor étant inséré dans une machine électrique différente et chaque arbre de transmission étant relié à un dispositif mécanique différent comprenant une section de compression.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1, dont il a déjà été fait mention, illustre un motocompresseur comprenant un système mécanique selon l'état de la technique ;
- la figure 2 illustre un premier mode de réalisation d'un système mécanique ;
- la figure 3 illustre un deuxième mode de réalisation du système mécanique ;
- la figure 4 illustre un troisième mode de réalisation du système mécanique ;
- la figure 5 illustre un mode de réalisation ne faisant pas partie de l'invention
- la figure 6 illustre un mode de réalisation ne faisant pas partie de l'invention
- la figure 7 illustre un mode de réalisation ne faisant pas partie de l'invention
- les figures 8 et 9 illustrent un sixième mode de réalisation d'un élément de compaction ;
- les figures 10 et 11 illustrent un septième mode de réalisation de l'élément de compaction ;
- les figures 12 et 13 illustrent un huitième mode de réalisation de l'élément de compaction ;
- les figures 14 et 15 illustrent un neuvième mode de réalisation de l'élément de compaction ; et
- les figures 16 et 17 illustrent un mode de réalisation ne faisant pas partie de l'invention.

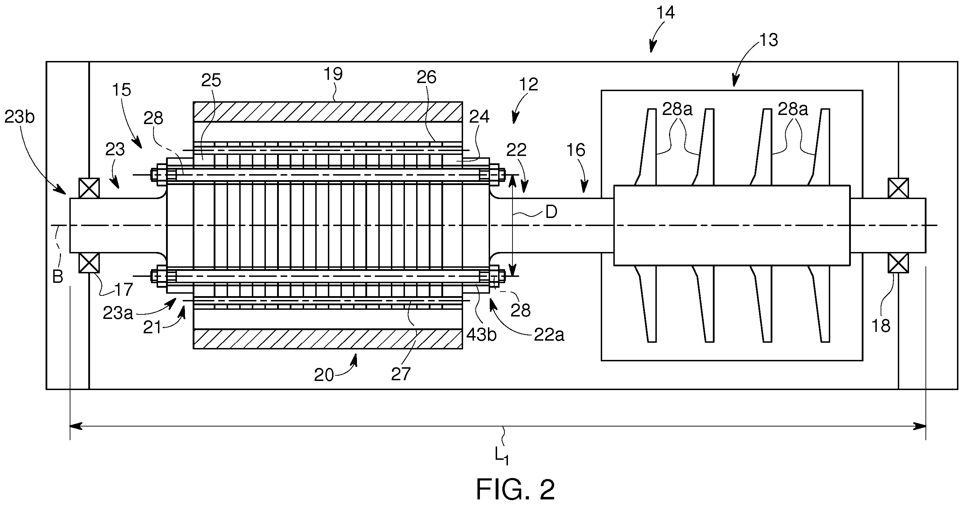

On se réfère à la figure 2 qui illustre une coupe partielle d'un système mécanique 12 relié à une section de compression 13 d'un premier mode de réalisation d'un motocompresseur 14, le système mécanique 12 étant intégré dans le motocompresseur 14.

Le système mécanique 12 comprend un rotor 15 comprenant un arbre non traversant d'axe central B relié directement à un arbre de transmission 16 de la section de compression 13.

Le diamètre de l'arbre de transmission 16 est dimensionné selon la valeur d'un couple à transmettre.

Le rotor 15 et l'arbre de transmission 16 sont maintenus en rotation par deux paliers 17 et 18 situés respectivement à l'extrémité libre du rotor 15 et de l'arbre de transmission 16.

Les paliers 17 et 18 sont par exemple des paliers sur film d'huile, sur film de gaz ou à sustentation magnétique.

Le rotor 15 est inséré dans un stator 19 d'une machine électrique tournante 20 du type asynchrone à cage d'écureuil.

En variante, la machine électrique tournante 20 peut être une machine du type asynchrone à rotor bobiné ou du type synchrone, de préférence à rotor bobiné dont l'alimentation du rotor se fait de préférence par l'intermédiaire de bagues et balais.

Le rotor 15 à arbre non traversant comprend une masse magnétique cylindrique 21 enserrée entre un premier 22 et un deuxième 23 éléments de compaction rapportés formant un arbre rotorique.

Une extrémité de l'arbre de transmission 16 est reliée directement au premier élément de compaction 22.

Les premier et deuxième éléments de compaction 23 et 24 sont de structure différente.

Le premier élément de compaction 22 comporte, selon un premier mode de réalisation, une bride de fixation 22a en contact avec la masse magnétique 21 et venue de matière avec l'arbre de transmission 16.

La bride de fixation 22a et l'arbre de transmission 16 sont par exemple obtenus par moulage ou forgeage.

Le deuxième élément de compaction 23 comporte, selon un deuxième mode de réalisation, une bride de fixation 23a en contact avec la masse magnétique 21 et un arbre final 23b solidaire de la surface libre de la bride de fixation 23a.

La masse magnétique 21 comprend deux disques de court-circuit 24 et 25 enserrant des tôles magnétiques compactées 26 et des barres conductrices 27 logées dans les tôles magnétiques 26 et les disques de court-circuit 24 et 25 de sorte les disques de court-circuit 24 et 25 et les barres conductrices 27 forment une cage d'écureuil.

Les tôles magnétiques 26 sont préférentiellement d'épaisseur inférieure à 2 mm, par exemple 0.65 mm ou 0.5 mm.

En variante, la masse magnétique 21 comprend un empilement de plaques métalliques, l'épaisseur des plaques métalliques étant de préférence supérieure à 5% du diamètre extérieur de la masse magnétique 21.

Selon encore une autre variante, la masse magnétique 21 comprend un corps monobloc en acier.

Des tirants 28 sont répartis uniformément sur un diamètre D de la masse magnétique 21 de manière à maintenir les tôles magnétiques 26 compactées entre les éléments de compaction 22 et 23.

Les tirants 28 passent à travers des trous lisses 43b disposés dans les éléments de compaction 22 et 23, et comprennent à chaque extrémité un écrou de manière à maintenir les tôles magnétiques 26 compactées.

La section de compression 13 comprend des roues 28a de compression montées sur l'arbre de transmission 16 de sorte que le rotor 15 entraîne en rotation les roues 28a pour comprimer un gaz.

Comme le rotor 15 est à arbre non traversant, la vitesse périphérique du rotor 15 n'est pas limitée à 200 m/s, permettant d'améliorer le rendement de la machine électrique 20. Plus la vitesse de rotation du rotor 15 est élevée, plus la puissance développée par la machine électrique tournante 20 est importante.

Le système mécanique 12 ne comporte pas de dispositif d'accouplement flexible entre l'arbre rotorique et l'arbre de transmission 16 permettant de supprimer les paliers maintenant le dispositif d'accouplement.

La suppression du dispositif d'accouplement flexible et des paliers de maintien dudit dispositif permet d'améliorer le rendement global de la transmission de puissance mécanique du système mécanique 12, notamment entre le rotor 15 et la section de compression 13.

De plus, la suppression du dispositif d'accouplement flexible et des paliers de maintien dudit dispositif permet de diminuer la masse du système mécanique 12 et diminuer une longueur L1 selon l'axe B du système mécanique 12 permettant d'abaisser la vitesse critique du système mécanique.

Plus précisément, le système mécanique 12 peut tourner à une vitesse de rotation hypercritique, c'est-à-dire supérieure ou égale à un multiple de la vitesse de rotation critique, par exemple à deux ou trois fois la vitesse critique.

Comme la longueur L1 du système mécanique 12 est plus courte que celle d'un système mécanique de l'état de la technique, le nombre de vitesses critiques réduit dans la plage de vitesses d'exploitation facilite l'exploitation du système mécanique 12.

Le rotor 15 peut tourner par exemple à une vitesse périphérique de 300 m/s améliorant d'autant le rendement énergétique du système mécanique 12.

De plus, comme l'élément de compaction 22 et l'arbre de transmission 16 sont venus de même matière, le couple maximal transmis par le rotor 15 à la section de compression 13 est supérieur au couple maximal transmis par un système mécanique connu de l'état de la technique comportant un dispositif flexible.

Selon un mode de réalisation, le système mécanique 12 peut être intégré ou couplé à tout dispositif mécanique comprenant un arbre de transmission.

En variante non représentée, la bride de fixation 22a comporte des trous taraudés pour accueillir les tirants 28 et la bride de fixation 23a comporte des lamages accueillant des écrous à l'autre extrémité des tirants 28.

Selon encore une autre variante, la bride de fixation 22a comprend des lamages accueillant des écrous noyés dans la bride de fixation et fixés à l'extrémité filetée des tirants 28.

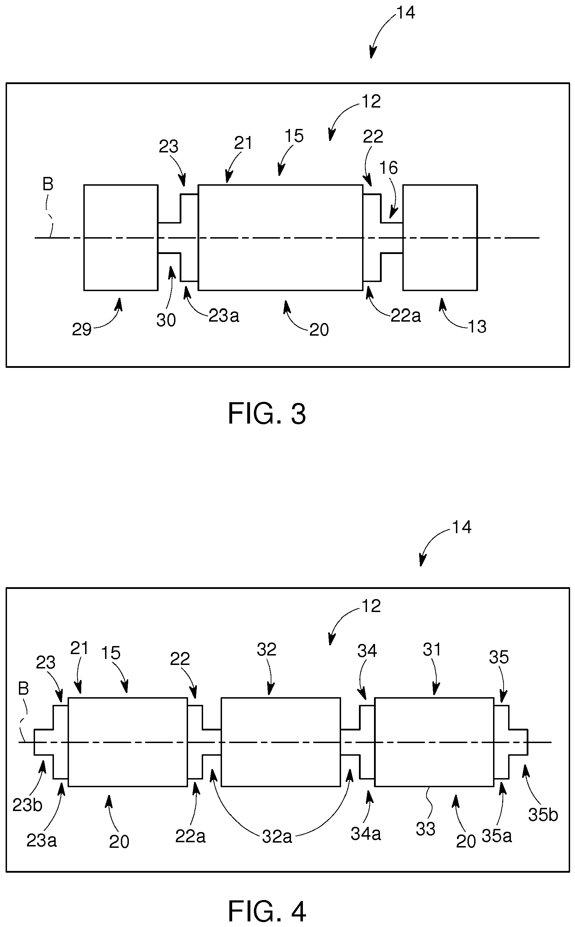

La figure 3 illustre une vue partielle d'un deuxième mode de réalisation du système mécanique 12 intégré dans un deuxième mode de réalisation du motocompresseur 14.

On retrouve le rotor 15 comprenant la masse magnétique 21 enserrée entre les premier et deuxième éléments de compaction 22 et 23, la section de compression 13 comprenant l'arbre de transmission 16.

Ce mode de réalisation diffère du mode de réalisation illustré à la figure 2 en ce que le deuxième élément de compaction 23 est de structure identique au premier élément de compaction 22.

Le deuxième élément de compaction 23 comprend la bride de fixation 23a directement reliée à un deuxième arbre de transmission 30, la bride de fixation 23a et le deuxième arbre de transmission 30 étant venus de même matière.

Le deuxième arbre de transmission 30 est incorporé dans une deuxième section de compression 29 identique à la première section de compression 13.

La machine électrique tournante 20 incorporant le rotor 15 est dimensionnée pour entraîner les deux sections de compression 13 et 29.

Généralement, le rendement d'une machine électrique tournante est meilleur pour une machine de grande puissance.

Par conséquent, le système mécanique 12 a un meilleur rendement global qu'un système comprenant deux machines électriques tournantes entraînant chacune un dispositif mécanique pour une puissance consommée identique.

De plus, l'emploi d'une seule machine tournante électrique tournante permet de réduire l'encombrement et la masse du système mécanique 12.

La figure 4 illustre une vue partielle d'un troisième mode de réalisation du système mécanique 12 intégré dans un troisième mode de réalisation du motocompresseur 14.

On retrouve le rotor 15 comprenant les deux éléments de compaction 22 et 23.

Ce mode de réalisation diffère des premier et deuxième modes de réalisation précédents illustrés aux figures 2 et 3 en ce qu'il comprend un deuxième rotor 31 de structure identique au rotor 15 et un dispositif mécanique 32, le deuxième rotor 31 étant incorporé dans une deuxième machine électrique tournante (non représentée) d'architecture identique à la machine électrique tournante 20.

Le deuxième rotor 31 comporte une masse magnétique 33 de structure identique à la masse magnétique 21 du rotor 15 enserrée par un premier et un deuxième éléments de compaction 35 et 34.

Selon un autre mode de réalisation, l'architecture de la deuxième machine électrique tournante peut être différente de l'architecture de la machine électrique tournante 20.

Selon encore un autre mode de réalisation, la masse magnétique 33 du deuxième rotor 31 peut être de structure différente de la masse magnétique 21 du rotor 15.

La masse magnétique 33 peut par exemple comporter des plaques épaisses remplaçant les tôles magnétiques.

Les deuxième et premier éléments de compactions 23 et 35 des rotors 15 et 31 sont de structure identique, le deuxième élément de compaction 23 comportant la bride de fixation 23a en contact avec la masse magnétique 21 et l'arbre final 23b solidaire de la surface libre de la bride de fixation 23a, et le premier élément de compaction 35 comportant une bride de fixation 35a en contact avec la masse magnétique 33 et un arbre final 35b solidaire de la surface libre de la bride de fixation 35a.

Le diamètre des arbres 23b et 35b peut être identique ou différent.

Le dispositif mécanique 32 comporte un arbre de transmission 32a.

Le premier élément de compaction 22 du rotor 15 comporte la bride de fixation 22a en contact avec la masse magnétique 21 et venue de même matière avec une première extrémité de l'arbre de transmission 32a, et le deuxième élément de compaction 34 du rotor 31 comporte une bride de fixation 34a en contact avec la masse magnétique 33 et venue de même matière avec une deuxième extrémité de l'arbre de transmission 32a.

Selon un autre mode de réalisation, les éléments de compaction des rotors 15 et 31 peuvent être de structures différentes.

Le système mécanique 12 comprenant deux machines électriques tournantes reliées à l'arbre de transmission 32a permet d'entraîner le dispositif mécanique 32 de très grande puissance ne pouvant être entraîné par une seule machine électrique tournante.

Le système mécanique 12 est ainsi plus compact, a une masse réduite et un meilleur rendement global qu'un système comprenant deux dispositifs mécaniques, chacun étant couplé à une machine électrique tournante.

Les systèmes mécaniques décrits aux figures 3 et 4 permettent par leur compacité et par la réduction du nombre de paliers de tourner à des vitesses de rotation hypercritiques ou multiple des vitesses de rotation critiques.

Deux rotors 15 et 31 de plus petits diamètres accouplés au dispositif mécanique 32 permettent de tourner à une vitesse périphérique supérieure à 200 m/s, par exemple à 300 m/s, améliorant le rendement global du système mécanique 12.

A présent, des modes de réalisation supplémentaires d'élément de compaction 22, 23, 34 et 35 sont détaillés.

Les éléments de compaction 22, 23, 34 et 35 comprennent l'une des structures détaillées dans les modes de réalisation suivants, les premier et deuxième éléments de compaction d'un même rotor pouvant être de structure identique ou différente.

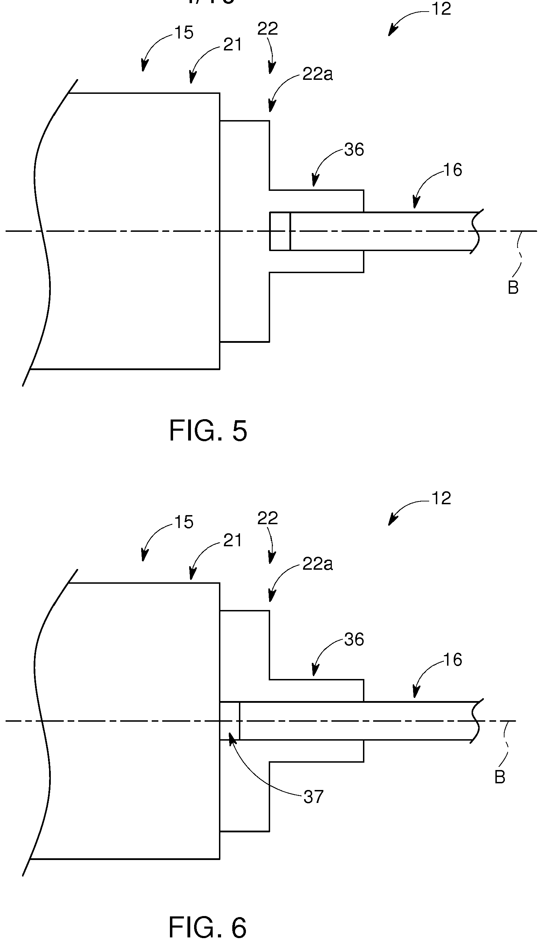

La figure 5 illustre une vue partielle d'un mode de réalisation ne faisant pas partie de l'invention comportant un troisième mode de réalisation de l'élément de compaction 22.

On retrouve le rotor 15 comportant le premier élément de compaction 22 et l'arbre de transmission 16.

L'élément de compaction 22 comprend la bride de fixation 22a en contact avec la masse magnétique 21.

L'extrémité libre de l'élément de compaction 22 comprend un manchon d'accouplement 36, l'arbre de transmission 16 s'emboîtant dans le manchon d'accouplement 36 de sorte qu'un couple mécanique transite à travers l'arbre de transmission 16 et la bride de fixation 22a.

Les diamètres intérieur et extérieur du manchon 36 sont dimensionnés selon le diamètre de l'arbre 16.

L'arbre de transmission 16 est solidarisé dans le manchon 36 par exemple par clavetage, par frettage ou par vissage dans un trou taraudé.

Selon un autre mode de réalisation, l'arbre 16 peut comporter des cannelures coopérant avec des cannelures présentes en périphérie du diamètre intérieur du manchon 36.

Le rotor 15 comprenant le manchon 36 et le dispositif mécanique comprenant l'arbre 16 peuvent être produits indépendamment l'un de l'autre, puis assemblés entre eux.

Cela permet de transporter le système mécanique en plusieurs modules comprenant par exemple un premier module comprenant la machine électrique 20 et un deuxième module comprenant la section de compression 13.

La figure 6 illustre une vue partielle d'un mode de réalisation ne faisant pas partie de l'invention comportant un quatrième mode de réalisation de l'élément de compaction 22.

Ce mode de réalisation de l'élément de compaction 22 diffère du troisième mode de réalisation précédent illustré à la figure 5 en ce que la bride de fixation 22a comporte un trou traversant 37 central se prolongeant dans le manchon d'accouplement 36, définissant un quatrième mode de réalisation de l'élément de compaction 22.

Les troisième et quatrième modes de réalisation de l'élément de compaction 22 permettent de réaliser une extrémité plus petite de l'arbre de transmission 16 facilitant par exemple le montage des roues 28a de compression en rendant possible leur montage par les deux extrémités de l'arbre 16.

En variante, le diamètre intérieur du manchon 36 est taraudé, conique ou polygonal pour transmettre encore plus de couple.

Le troisième mode de réalisation permet de tourner à des vitesses de rotation plus élevées que dans le quatrième mode de réalisation mais en transmettant un couple moindre que dans le quatrième mode de réalisation.

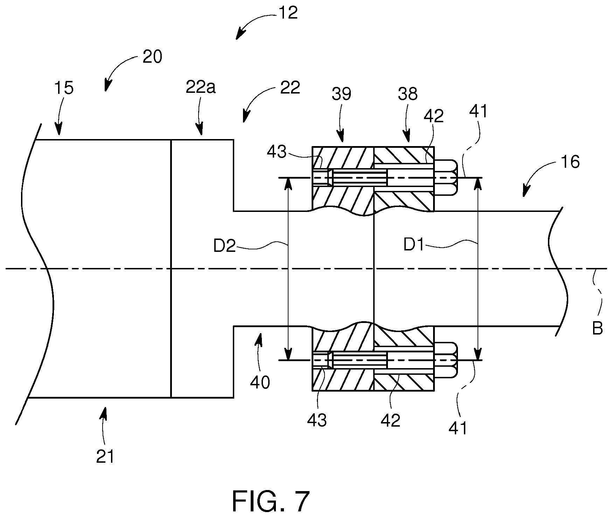

La figure 7 illustre une coupe partielle d'un mode de réalisation ne faisant pas partie de l'invention comportant un cinquième mode de réalisation de l'élément de compaction 22.

On retrouve le rotor 15 et l'arbre de transmission 16.

Une extrémité de l'arbre de transmission 16 comprend un premier tourteau d'accouplement 38.

L'élément de compaction 22 comprend la bride de fixation 22a en contact avec la masse magnétique 21.

L'extrémité libre de l'élément de compaction 22 comprend un deuxième tourteau d'accouplement 39, les premier et deuxième tourteaux d'accouplement 38 et 39 étant reliés entre eux de sorte qu'un couple mécanique transite à travers l'arbre de transmission 16 et la bride de fixation 22a.

La bride de fixation 22a et le deuxième tourteau d'accouplement 39 sont reliés par un arbre médian 40.

Les tourteaux d'accouplement sont reliés entre eux par exemple par des vis 41, chaque vis 41 passant par un trou lisse 42 débouchant du premier tourteau d'accouplement 38, et étant en prise dans un trou taraudé 43 du deuxième tourteau d'accouplement 39.

Les trous taraudés 43 sont répartis uniformément sur un diamètre d'implantation D2 du deuxième tourteau 39 et les trous lisses 42 débouchant sont répartis uniformément sur un diamètre d'implantation D1 du premier tourteau 38, les diamètres d'implantation D1 et D2 des premier et deuxième tourteaux étant égaux ou sensiblement égaux.

Selon un autre mode de réalisation, l'élément de compaction 22 ne comporte pas l'arbre médian 40.

Selon encore un autre mode de réalisation, si l'élément de compaction 22 comporte l'arbre médian 40, les trous lisses 42 et taraudés 43 sont insérés respectivement dans les deuxième et premier tourteaux d'accouplement 39 et 38.

En variante, les tourteaux d'accouplement 38 et 39 comportent des trous lisses 42 dans lesquels sont insérés des boulons d'accouplement, par exemple vis et écrous, ou des goujons filetés, un écrou étant en prise sur une extrémité de chaque goujon.

Le rotor 15 et l'arbre de transmission 16 peuvent être désolidarisés aisément en démontant les vis 41 et solidarisés aisément en vissant les vis 41.

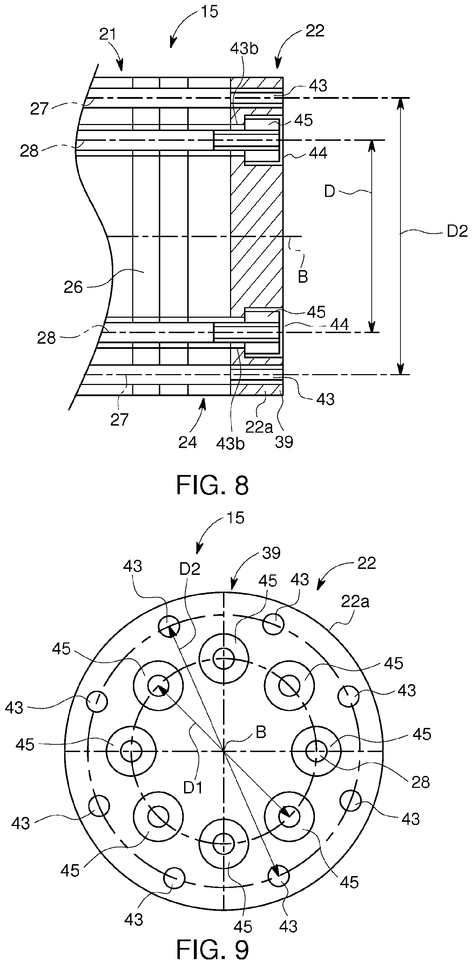

Les figures 8 et 9 illustrent une coupe partielle et une vue latérale d'un sixième mode de réalisation de l'élément de compaction 22 comportant un deuxième mode de réalisation du deuxième tourteau d'accouplement 39.

On retrouve le rotor 15 comprenant l'élément de compaction 22.

Ce mode de réalisation diffère du mode de réalisation précédent illustré à la figure 7 en ce que l'élément de compaction 22 ne comporte pas d'arbre médian 40 et en ce que l'élément de compaction 22 comprend des lamages 44 accueillant des écrous 45 maintenant les tôles magnétiques 26 compactées de sorte que l'extrémité des tirants 28 dans l'élément de compaction 22 est noyée dans ledit élément de compaction, les tirants passant par les trous lisses 43b insérés dans la bride de fixation 22a.

Le diamètre D d'implantation des tirants 28 est inférieur aux diamètres d'implantation des trous 43 et 42 des premier et deuxième tourteaux 38 et 39.

La bride de fixation 22a et le tourteau d'accouplement 39 forment une seule pièce, les trous taraudés 43 étant réalisés dans la bride de fixation 22a et uniformément répartis sur un diamètre d'implantation D2.

En variante non représentée, les trous 43 sont répartis uniformément sur deux diamètres différents de la bride de fixation 22a pour transmettre plus de couple au tourteau d'accouplement 38 de l'arbre 16 pourvu de deux rangées de vis de fixation 41.

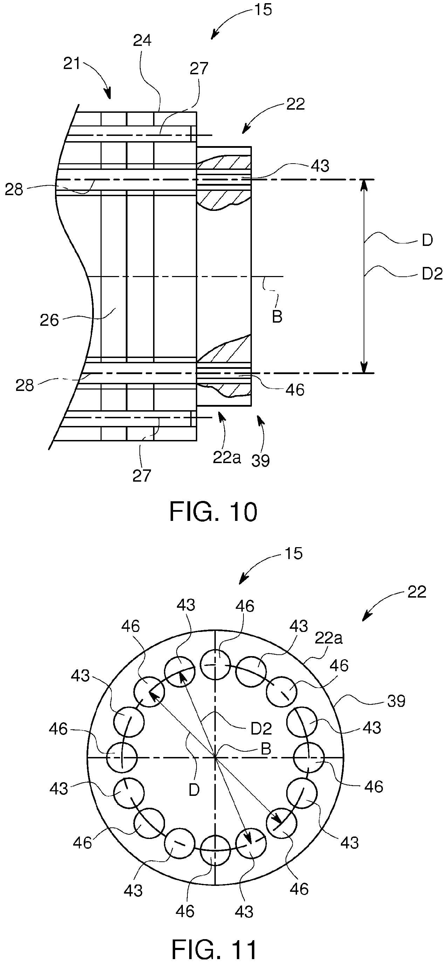

Les figures 10 et 11 illustrent une coupe partielle et une vue latérale d'un septième mode de réalisation de l'élément de compaction 22.

On retrouve le rotor 15 comprenant l'élément de compaction 22.

Ce mode de réalisation diffère du mode de réalisation précédent illustré à la figure 8 en ce que le diamètre d'implantation D des tirants 28 est égal ou sensiblement égal au diamètre d'implantation D2 des trous taraudés 43 du deuxième tourteau d'accouplement 39, les trous taraudés 43 alternant avec les trous d'implantation 46 des tirants 28.

L'extrémité des tirants 28 est en prise dans un trou taraudé 46 de sorte que l'extrémité de chaque tirant 28 est noyée dans l'élément de compaction 22.

En variante non représentée, le diamètre d'implantation D2 des trous taraudés 43 est supérieur au diamètre D des tirants 28.

Selon une autre variante non représentée, les trous taraudés 43 sont implantés sur deux diamètres d'implantation différents.

Selon encore une autre variante non représentée, le diamètre d'implantation D2 des trous taraudés 43 est inférieur au diamètre d'implantation D des tirants 28.

Les sixième et septième modes de réalisation de l'élément de compaction 22 permettent de produire indépendamment l'un de l'autre le rotor 15 et le dispositif mécanique comprenant l'arbre de transmission 16, puis de les assembler entre eux permettant de transporter le système mécanique en plusieurs modules séparés.

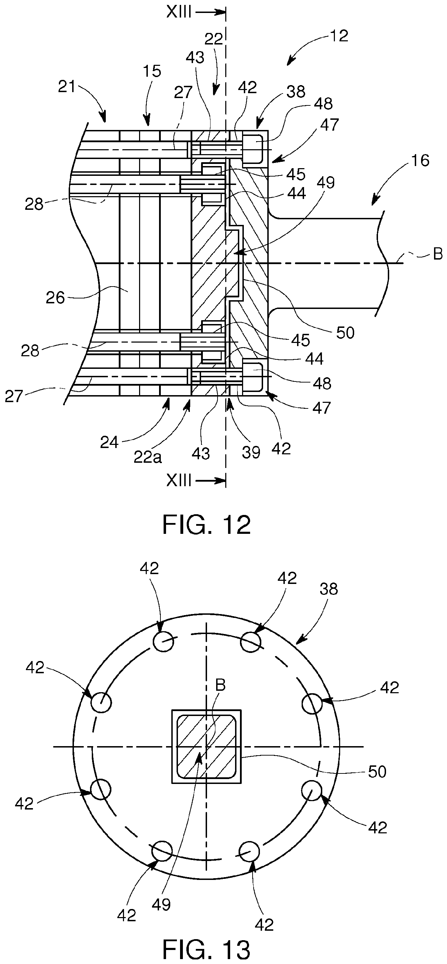

Les figures 12 et 13 illustrent des coupes partielles d'un septième mode de réalisation du système mécanique 12 comportant un huitième mode de réalisation de l'élément de compaction 22.

On retrouve le rotor 15 comprenant l'élément de compaction 22 comportant un troisième mode de réalisation du deuxième tourteau 39, et l'arbre de transmission 16 comprenant un deuxième mode de réalisation du premier tourteau 38.

Dans ce mode de réalisation du système mécanique 12, le premier tourteau 38 diffère du premier mode de réalisation du tourteau 38 illustré à la figure 7 en ce que le premier tourteau 38 comprend des lamages 47 dans lesquels sont insérés des têtes de vis 48 reliant les premier et deuxième tourteaux 38 et 39, et en ce que le premier tourteau 38 comprend un trou borgne central 50 comprenant un axe central aligné ou sensiblement aligné sur l'axe B.

En outre, dans ce mode de réalisation, le deuxième tourteau 39 diffère du deuxième mode de réalisation du tourteau 39 illustré à la figure 8 en ce qu'il comprend un pion central 49 s'emboîtant avec ou sans jeu dans le trou borgne 50 pour transmettre un couple entre les premier et deuxième tourteaux 38 et 39.

Le pion 49 peut par exemple être carré, polygonal, triangulaire.

Le pion 49 emboîté dans le trou 50 permet de transmettre un couple plus élevé que dans les modes de réalisation précédents ne comportant pas un arbre et une bride de fixation venue de même matière ou ne comportant pas de pion 49.

En variante, le pion 49 est polygonal non symétrique permettant une indexation angulaire entre les tourteaux 38 et 39.

Selon une autre variante, le pion 49 est cylindrique permettant un blocage radial entre les tourteaux 38 et 39.

Selon encore un autre mode de réalisation, le pion 49 est situé dans le premier tourteau 38 et le trou borgne 50 est situé dans le deuxième tourteau 39.

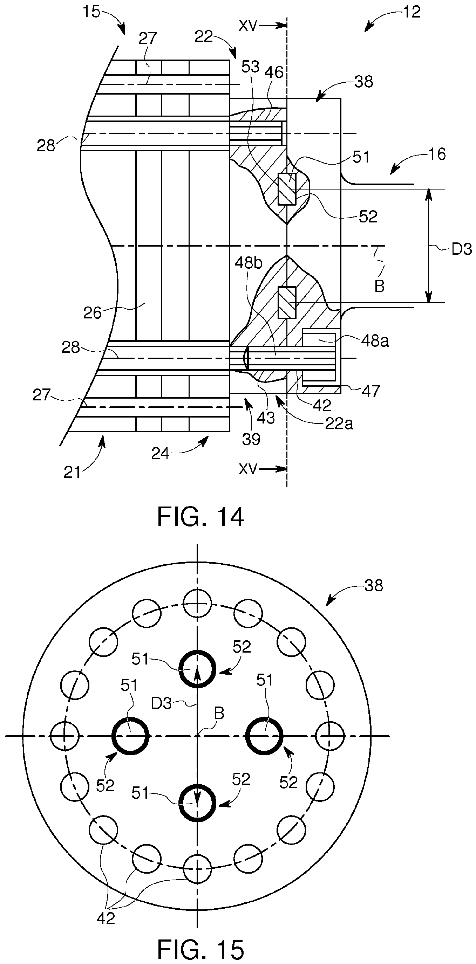

Les figures 14 et 15 illustrent des coupes partielles d'un huitième mode de réalisation du système mécanique 12 comportant un neuvième mode de réalisation de l'élément de compaction 22.

On retrouve le rotor 15 comprenant l'élément de compaction 22 comportant un quatrième mode de réalisation du deuxième tourteau 39 et l'arbre de transmission 16 comprenant un troisième mode de réalisation du premier tourteau 38, et des pions 51.

Les pions 51 peuvent être de forme diverse, par exemple rectangulaire, polygonal ou cylindrique.

Dans ce mode de réalisation, le premier tourteau 38 diffère du premier mode de réalisation du premier tourteau 38 illustré à la figure 7 en ce que le premier tourteau 38 comprend les lamages 47 dans lesquels sont insérés les écrous 48a des goujons filetés 48b reliant les premier et deuxième tourteaux 38 et 39, et en ce que le premier tourteau 38 comprend des trous borgnes 52 répartis uniformément sur un diamètre D3.

En outre, dans ce mode de réalisation, le deuxième tourteau 39 diffère du deuxième mode de réalisation du tourteau 39 illustré à la figure 8, en ce qu'il comprend des trous borgnes 53 répartis uniformément sur le diamètre D3 de sorte que les pions 51 s'insèrent dans les trous borgnes 52 et 53.

Les pions 51 insérés dans les trous borgnes 52 et 53 permettent de transmettre un couple plus élevé que dans les modes de réalisation du système mécanique ne comportant pas de pions ni un arbre et une bride de fixation venue de même matière.

Les tourteaux 38 et 39 comportent au moins deux trous borgnes 52 et 53 configurés pour accueillir chacun un pion 51.

En variante non représentée, les pions 51 sont implantés sur deux diamètres d'implantation différents.

Les pions 51 peuvent être insérés avec ou sans jeu dans les trous borgnes 52 et 53, collés ou frettés dans un ou deux trous borgnes 52, 53.

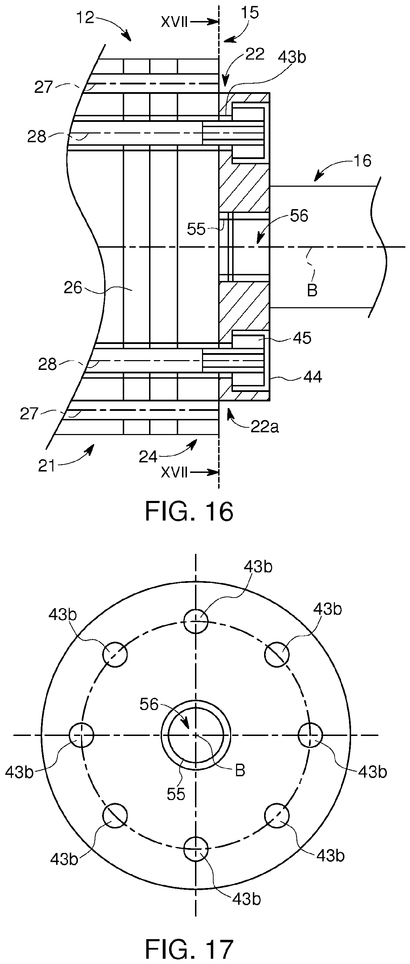

Les figures 16 et 17 illustrent des coupes partielles d'un mode de réalisation ne faisant pas partie de l'invention comportant un dixième mode de réalisation de l'élément de compaction 22.

On retrouve le rotor 15 comprenant l'élément de compaction 22 comprenant la bride de fixation 22a et l'arbre de transmission 16.

La bride de fixation 22a comprend des trous lisses 43b surmontés de lamages 44 accueillant les écrous 45 pour maintenir les tôles magnétiques 26 compactées, et un trou central taraudé 55 débouchant.

L'arbre de transmission 16 comprend un pion central 56 fileté.

Le pion central 56 vient en prise dans le trou central taraudé 55 de sorte qu'un couple mécanique transite à travers l'arbre de transmission 16 et la bride de fixation 22a.

L'arbre 16 comprend un épaulement en appui sur la bride de fixation lorsque le pion central 56 est entièrement vissé dans le trou central taraudé 55.

En variante, l'arbre de transmission 16 ne comporte pas d'épaulement de sorte que lorsque l'extrémité filetée de l'arbre 16 est entièrement vissée dans le trou central taraudé 55, l'extrémité de l'arbre 16 est en appui contre la masse magnétique 21, par exemple contre le disque de court-circuit 24.

Selon un autre mode de réalisation, le trou central 55 et le pion 56 ne comprennent pas de taraudage et de filetage, et sont emboîtés par exemple par frettage, clavetage ou soudage.

Selon encore un autre mode de réalisation, l'arbre de transmission 16 ne comporte pas de pion central 56, l'extrémité de l'arbre 16 étant emboîtée dans le trou central 55.

En variante, le pion 56 ou l'extrémité de l'arbre 16 est conique, polygonale ou comporte des cannelures pour transmettre plus de couple.

Les modes de réalisation décrits aux figures 5 à 17 permettent de produire indépendamment le rotor 15, l'arbre de transmission 16 et le dispositif mécanique incorporant l'arbre 16 facilitant notamment la logistique et la manutention.

Bien entendu, dans les modes de réalisation décrits précédemment, les tirants 28 peuvent être maintenus dans un élément de compaction par un écrou noyé dans l'élément de compaction ou peuvent être pris dans un taraudage inséré dans un élément de compaction de sorte que l'extrémité du tirant ne dépasse pas de l'élément de compaction pour notamment assurer un bon contact entre la bride de fixation et le tourteau d'accouplement de l'arbre 16.

Dans les modes de réalisation décrits précédemment, les machines électriques tournantes fonctionnent en mode moteur.

Bien entendu, les machines électriques tournantes peuvent fonctionner en mode génératrice pour produire une puissance électrique.

Dans ce mode de fonctionnement, le système mécanique 12 est entraîné par un dispositif producteur de puissance mécanique, comme par exemple une turbine à gaz ou une turbine à vapeur, l'arbre ou les arbres de transmission 16 entraînant le ou les rotors.

Selon un autre mode de fonctionnement, une première bride de fixation du rotor 15 peut entraîner un dispositif mécanique consommateur de puissance mécanique, par exemple un compresseur, et la deuxième bride de fixation du rotor 15 peut être entraînée par un dispositif mécanique producteur de puissance mécanique, par exemple un moteur électrique, un moteur à combustion interne, notamment un moteur Diesel, une turbine à gaz ou à vapeur.

Bien entendu, le rotor 15 peut comprendre des brides de fixation 22a et 23a identiques ou différentes suivant l'un des modes de réalisation décrit aux figures 2 à 17.

Les modes de réalisation du système mécanique 12 décrits précédemment permettent notamment de diminuer la masse et l'encombrement du système tout en augmentant la vitesse de rotation de la ou des machines électriques tournantes incorporées dans le système de manière à augmenter le rendement global et la puissance transitant à travers ledit système.

## Revendications

1. Système mécanique (12) pour machine électrique tournante (20) comprenant au moins un rotor (15, 31) et au moins un arbre (16, 30, 32a) de transmission pour dispositif mécanique (13, 29, 32), le rotor étant à arbre non traversant et comprenant une masse magnétique cylindrique (21) enserrée entre un premier (22, 35) et un deuxième (23, 34) éléments de compaction rapportés formant un arbre rotorique, une extrémité de l'arbre de transmission étant reliée directement au premier élément de compaction, une extrémité du premier ou du deuxième arbre de transmission (16, 30) comprenant un premier tourteau (38) d'accouplement, le premier ou le deuxième élément (22, 23) de compaction comprenant une bride de fixation (22a, 23a) en contact avec la masse magnétique (21), l'extrémité libre du premier ou du deuxième élément de compaction comprenant un deuxième tourteau (39) d'accouplement relié avec le tourteau d'accouplement du premier ou du deuxième arbre de transmission de sorte qu'un couple mécanique transite à travers l'un des arbres de transmission et la bride de fixation, le système mécanique (12) comprenant des vis (41, 48), chaque vis passant par un trou lisse débouchant (42) du premier tourteau d'accouplement (38) et étant en prise dans un trou taraudé (43) du deuxième tourteau d'accouplement (39), les trous taraudés étant répartis uniformément sur un diamètre d'implantation (D2) du deuxième tourteau et les trous lisses débouchant étant répartis uniformément sur un diamètre d'implantation (DI) du premier tourteau, les diamètres d'implantation des trous des premier et deuxième tourteaux étant égaux ou sensiblement égaux, le système mécanique (12) comprenant des tirants (28) répartis uniformément sur un diamètre (D) de la masse magnétique (21) de manière à maintenir la masse magnétique compactée entre les deux éléments de compaction (22, 23), l'extrémité des tirants dans le premier ou le deuxième élément de compaction étant noyée dans ledit élément de compaction, **caractérisé en ce que** les tirants (28) sont maintenus dans un élément de compaction (22, 23) par un écrou noyé dans l'élément de compaction ou sont pris dans un taraudage inséré dans un élément de compaction (22, 23) de sorte que l'extrémité du tirant (28) ne dépasse pas de l'élément de compaction, la bride de fixation (22a) et le deuxième tourteau d'accouplement (39) formant une seule pièce, le diamètre d'implantation (D) des tirants étant inférieur aux diamètres d'implantation (D1, D2) des premier et deuxième tourteaux (38, 39) ou le diamètre d'implantation (D) des tirants étant égal ou sensiblement égal aux diamètres d'implantation (D1, D2) des premier et deuxième tourteaux (38, 39), les trous taraudés (43) alternant avec les trous d'implantation des tirants.

2. Système mécanique selon la revendication 1, comprenant en outre un deuxième arbre de transmission (30) pour dispositif mécanique, le deuxième arbre de transmission étant relié directement au deuxième élément de compaction (23).

3. Système mécanique selon la revendication 1, comprenant en outre un deuxième rotor (31) à arbre non traversant, le deuxième élément de compaction (34) du deuxième rotor étant relié directement à une deuxième extrémité de l'arbre de transmission (32a).

4. Système mécanique selon l'une des revendications 1 à 3, dans lequel les premier et deuxième éléments (22, 23, 34, 35) de compaction sont de structure identique.

5. Système mécanique selon l'une des revendications 1 à 4, dans lequel le premier tourteau (38) comprend un trou borgne central (50) et le deuxième tourteau (39) comprend un pion central (49) s'emboîtant dans le trou borgne pour transmettre un couple entre les premier et deuxième tourteaux.

6. Système mécanique selon l'une des revendications 1 à 4, dans lequel les premier et deuxième tourteaux (38, 39) comprennent des trous borgnes (52, 53) répartis uniformément sur un même diamètre (D3), le système comprenant en outre des pions (51) insérés dans les trous borgnes des premier et deuxième tourteaux pour transmettre un couple entre les premier et deuxième tourteaux.

7. Motocompresseur (14) comprenant un système mécanique selon l'une quelconque des revendications 1 à 6, un même nombre de machine électrique tournante (20) que de rotor (15, 31) et un même nombre de dispositif mécanique (13, 29, 32) que d'arbre de transmission (16, 30, 32a), chaque rotor étant inséré dans une machine électrique différente et chaque arbre de transmission étant relié à un dispositif mécanique différent

## Patentansprüche

1. Mechanisches System (12) für eine drehende elektrische Maschine (20), umfassend mindestens einen Rotor (15, 31) und mindestens eine Antriebswelle (16, 30, 32a) für eine mechanische Vorrichtung (13, 29, 32), wobei der Rotor mit einer nicht durchgehenden Welle ist, und eine zylindrische magnetische Masse (21) umfasst, die zwischen einem ersten (22, 35) und einem zweiten (23, 34) beigebrachten Verdichtungselement eingeklemmt ist, die eine Rotorwelle bilden, wobei ein Ende der Antriebswelle direkt mit dem ersten Verdichtungselement verbunden ist, ein Ende der ersten oder der zweiten Antriebswelle (16, 30) einen ersten Kupplungsläuferstern (38) umfasst, das erste oder das zweite Verdichtungselement (22, 23) einen Befestigungsflansch (22a, 23a) in Kontakt mit der magnetischen Masse (21) umfasst, das freie Ende des ersten oder des zweiten Verdichtungselements einen zweiten Kupplungsläuferstern (39) umfasst, der mit dem Kupplungsläuferstern der ersten oder der zweiten Antriebswelle derart verbunden ist, dass ein mechanisches Moment durch eine der Antriebswellen und den Befestigungsflansch hindurch verläuft, wobei das mechanische System (12) Schrauben (41, 48) umfasst, wobei jede Schraube durch ein glattes Durchgangsloch (42) des ersten Kupplungsläufersterns (38) verläuft, und in Eingriff in einem Gewindeloch (43) des zweiten Kupplungsläufersterns (39) ist, wobei die Gewindelöcher gleichförmig über einen Einbaudurchmesser (D2) des zweiten Läufersterns verteilt sind, und die glatten Durchgangslöcher gleichförmig über einen Einbaudurchmesser (D1) des ersten Läufersterns verteilt sind, wobei die Einbaudurchmesser der Löcher des ersten und zweiten Laufsterns gleich oder im Wesentlichen gleich sind, wobei das mechanische System (12) Zugstangen (28) umfasst, die derart gleichförmig über einen Durchmesser (D) der magnetischen Masse (21) verteilt sind, um die magnetische Masse zwischen den beiden Verdichtungselementen (22, 23) verdichtet zu halten, wobei das Ende der Zugstangen in dem ersten oder dem zweiten Verdichtungselement in das Verdichtungselement eingelassen ist, **dadurch gekennzeichnet, dass** die Zugstangen (28) in einem Verdichtungselement (22, 23) durch eine Mutter gehalten werden, die in das Verdichtungselement eingelassen ist, oder in einem Innengewinde aufgenommen sind, das derart in einem Verdichtungselement (22, 23) eingeführt ist, dass das Ende der Zugstange (28) nicht über das Verdichtungselement übersteht, wobei der Befestigungsflansch (22a) und der zweite Kupplungsläuferstern (39) ein einziges Teil bilden, wobei der Einbaudurchmesser (D) der Zugstangen kleiner ist, als die Einbaudurchmesser (D1, D2) des ersten und zweiten Laufsterns (38, 39) oder der Einbaudurchmesser (D) der Zugstangen gleich oder im Wesentlichen gleich den Einbaudurchmessern (D1, D2) des ersten und zweiten Laufsterns (38, 39) ist, wobei sich die Gewindelöcher (43) mit den Einbaulöchern der Zugstangen abwechseln.

2. Mechanisches System nach Anspruch 1, weiter eine zweite Antriebswelle (30) für eine mechanische Vorrichtung umfassend, wobei die zweite Antriebswelle direkt mit dem zweiten Verdichtungselement (23) verbunden ist.

3. Mechanisches System nach Anspruch 1, weiter einen zweiten Rotor (31) mit nicht durchgehender Welle umfassend, wobei das zweite Verdichtungselement (34) des zweiten Rotors direkt mit einem zweiten Ende der Antriebswelle (32a) verbunden ist.

4. Mechanisches System nach einem der Ansprüche 1 bis 3, wobei das erste und zweite Verdichtungselement (22, 23, 34, 35) von identischer Struktur sind.

5. Mechanisches System nach einem der Ansprüche 1 bis 4, wobei der erste Laufstern (38) ein zentrales Sackloch (50) umfasst, und der zweite Laufstern (39) einen zentralen Stift (49) umfasst, der in das Sackloch einrastet, um ein Moment zwischen dem ersten und zweiten Laufstern zu übertragen.

6. Mechanisches System nach einem der Ansprüche 1 bis 4, wobei der erste und zweite Laufstern (38, 39) Sacklöcher (52, 53) umfassen, die gleichförmig über einen selben Durchmesser (D3) verteilt sind, wobei das System weiter Stifte (51) umfasst, die in die Sacklöcher des ersten und zweiten Laufsterns eingeführt sind, um ein Moment zwischen dem ersten und zweiten Laufstern zu übertragen.

7. Motorkompressor (14), umfassend ein mechanisches System nach einem der Ansprüche 1 bis 6, eine selbe Anzahl einer drehenden elektrischen Maschine (20) wie Rotor (15, 31) und eine selbe Anzahl einer mechanischen Vorrichtung (13, 29, 32) wie Antriebswelle (16, 30, 32a), wobei jeder Rotor in eine andere elektrische Maschine eingeführt wird, und jede Antriebswelle mit einer anderen mechanischen Vorrichtung verbunden ist.

## Claims

1. A mechanical system (12) for an electric rotating machine (20) comprising at least one rotor (15, 31) and at least one transmission shaft (16, 30, 32a) for a mechanical device (13, 29, 32), the rotor having a non-through shaft and comprising a cylindrical magnetic mass (21) sandwiched between a first (22, 35) and a second (23, 34) added compaction elements forming a rotor shaft, one end of the transmission shaft being directly connected to the first compaction element, one end of the first or second transmission shaft (16, 30) comprising a first coupling flange (38), the first or second compaction element (22, 23) comprising a mounting clamp (22a, 23a) in contact with the magnetic mass (21) , the free end of the first or second compaction element comprising a second coupling flange (39) connected to the coupling flange of the first or second transmission shaft so that a mechanical torque transits through one of the transmission shaft and the mounting clamp, the mechanical system (12) comprising screws (41, 48), each screw passing through a plain through-hole (42) of the first coupling flange (38) and being engaged in a tapped hole (43) of the second coupling flange (39), the tapped holes being evenly distributed over a pilot diameter (D2) of the second flange and the plain through-holes being evenly distributed over a pilot diameter (D1) of the first flange, the pilot diameters of the holes of the first and second flanges being equal or substantially equal, the mechanical system (12) comprising tie rods (28) evenly distributed over a diameter (D) of the magnetic mass (21) so as to hold the compacted magnetic mass between the two compaction elements (22, 23), the end of the tie rods in the first or second compaction element being embedded into said compaction element, **characterised in that** the tie rods (28) are held in a compaction element (22, 23) by a nut embedded into the compaction element or are engaged in a tapping inserted into the compaction element (22, 23) so that the end of the tie rod (28) does not protrude from the compaction element, the mounting clamp (22a) and the second coupling flange (39) forming a single piece, the pilot diameter (D) of the tie rods being less than the pilot diameters (D1, D2) of the first and second flanges (38, 39) or the pilot diameter (D) of the tie rods being equal or substantially equal to the pilot diameters (D1, D2) of the first and second flanges (38, 39), the tapped holes (43) alternating with the pilot holes of the tie rods.

2. The mechanical system according to claim 1, further comprising a second transmission shaft (30) for a mechanical device, the second transmission shaft being directly connected to the second compaction element (23).

3. The mechanical system according to claim 1, further comprising a second rotor (31) with a non-through shaft, the second compaction element (34) of the second rotor being directly connected to a second end of the transmission shaft (32a).

4. The mechanical system according to one of claims 1 to 3, wherein the first and second compaction elements (22, 23, 34, 35) are of identical structure.

5. The mechanical system according to one of claims 1 to 4, wherein the first flange (38) comprises a central blind hole (50) and the second flange (39) comprises a central pin (49) nesting into the blind hole to transmit a torque between the first and second flanges.

6. The mechanical system according to one of claims 1 to 4, wherein the first and second flanges (38, 39) comprise blind holes (52, 53) evenly distributed over a same diameter (D3), the system further comprising pins (51) inserted into the blind holes of the first and second flanges to transmit a torque between the first and second flanges.

7. A motocompressor (14) comprising a mechanical system according to any of claims 1 to 6, a same number of electric rotating machines (20) as rotors (15, 31) and a same number of mechanical devices (13, 29, 32) as transmission shafts (16, 30, 32a), each rotor being inserted into a different electric machine and each transmission shaft being connected to a different mechanical device.
